# FASCICULE DE BREVET EUROPEEN

(11) **EP 3 580 082 B1**
(45) Date de publication et mention de la délivrance du brevet: **03.03.2021**
(21) Numéro de dépôt: 18702762.8
(22) Date de dépôt: 12.01.2018
(51) Int. Cl.: B60K 17/24, B60K 5/04, F16C 35/067

(54) **AGENCEMENT DE PALIER RADIAL D'ARBRE DE TRANSMISSION D'UN VÉHICULE A BRIDE D'IMMOBILISATION RADIALE DU ROULEMENT DE PALIER**
RADIALLAGERANORDNUNG EINER ANTRIEBSWELLE EINES FAHRZEUGS, MIT EINEM FLANSCH ZUR RADIALEN FESTLEGUNG DES WÄLZLAGERS
RADIAL BEARING ARRANGEMENT OF A TRANSMISSION SHAFT OF A VEHICLE, WITH A FLANGE FOR THE RADIAL IMMOBILISATION OF THE ROLLING BEARING

(30) Priorité: 10.02.2017 FR 1751114
(43) Date de publication de la demande: 18.12.2019
(73) Titulaire: PSA Automobiles SA, 78300 Poissy (FR)
(72) Inventeur: ROGER, Christophe, 28350 St Lubin des Joncherets (FR); GIRAUD, Philippe, 25460 Etupes (FR)
(86) Numéro de dépôt international: PCT/FR2018/050069
(87) Numéro de publication internationale: WO 2018/146392

(56) Documents cités:
- EP-A1- 1 415 847
- FR-A1- 2 876 630
- FR-A1- 2 927 280

## Description

La présente invention concerne un agencement de palier radial d'arbre de transmission d'un véhicule, tel qu'un véhicule automobile.

Il est connu d'équiper de paliers les arbres de transmission de véhicules, à un endroit intermédiaire le long de leur longueur.

Le document EP 1 415 847 B1 divulgue un agencement de palier radial supportant en rotation un arbre de transmission interne d'un véhicule automobile, et qui comprend une chaise ou console formant palier fixée de manière amovible par des vis de fixation par exemple au bloc cylindre ou au carter du moteur thermique du véhicule.

Le palier comporte un alésage dimensionné pour recevoir et supporter un roulement, utilisé lui-même pour supporter, de manière axiale et radiale, l'arbre de transmission. Le roulement peut être à billes ou à aiguilles, dont la bague extérieure est logée dans l'alésage du palier.

Le logement du roulement dans le palier comporte en outre un épaulement interne, qui s'étend à travers au moins une partie de l'épaisseur de la bague extérieure de roulement, afin de définir une limite de position axiale du roulement monté dans ce logement.

L'agencement du palier comprend en outre une bride ou chapeau de palier arqué, adapté de façon à retenir le roulement en position dans l'alésage du palier.

Le chapeau de palier comporte deux parois latérales arquées et opposées de façon à envelopper au moins partiellement une portion de la bague extérieure de roulement de manière que, lorsque le chapeau de palier est fermé contre le roulement, au moins le mouvement axial de ce palier est restreint par le chapeau de palier dans l'une ou l'autre direction axiale le long d'un axe à travers le palier.

Cependant, l'utilisation du chapeau de palier pose un problème de positionnement axial précis du roulement dans la portée de palier. En effet, en position d'immobilisation axiale du roulement dans l'alésage du palier, l'une des parois latérales du chapeau de palier doit se trouver dans le même plan que l'épaulement interne de la portée de palier et contre lequel vient en butée le roulement, sinon il y a un risque de ne pouvoir positionner le chapeau de palier à sa position de chevauchement de la portion de la bague extérieure de roulement ou que la paroi latérale risque de légèrement déplacer axialement le palier hors de son épaulement de butée. Il y a alors un mauvais positionnement du palier dans la portée de palier susceptible de provoquer des bruits parasites perceptibles par les passagers du véhicule.

La présente invention a pour but de pallier les inconvénients ci-dessus de l'art antérieur.

A cet effet, l'invention propose un agencement de palier radial d'arbre de transmission d'un véhicule, notamment automobile, comprenant un palier solidaire du carter du moteur de propulsion du véhicule, un siège de palier formé dans le palier et dans lequel est axialement fixé à l'un de ses côtés un roulement supportant de manière rotative l'arbre de transmission, lequel roulement fait en partie saillie extérieurement du siège de palier à son côté opposé, et une bride de retenue amoviblement fixée au palier et immobilisant au moins axialement le roulement dans le siège de palier, et qui est caractérisé en ce que la bride de retenue comprend une partie sensiblement semi-circulaire comportant une portée interne tronconique sensiblement semi-circulaire en appui sur une partie correspondante du bord d'extrémité annulaire externe de la partie en saillie extérieurement du roulement de manière à immobiliser radialement le roulement dans le siège de palier.

De préférence, la bride de retenue comprend deux pattes solidaires respectivement des deux extrémités de la partie sensiblement semi-circulaire de la bride de retenue et qui sont fixées au palier de manière amovible par des vis de fixation.

Avantageusement, l'une des pattes de fixation de la bride de retenue est montée pivotante autour de la vis de fixation correspondante entre une position ouverte de la bride de retenue dans laquelle le roulement peut être monté dans le siège de palier et une position fermée de cette bride dans laquelle le roulement est immobilisé dans le siège de palier.

L'autre des pattes de fixation possède une encoche dans laquelle est engagée la vis de fixation opposée à celle permettant le pivotement de la bride de retenue.

De préférence, le roulement est à billes, à rouleaux ou à aiguilles.

L'invention vise également un véhicule notamment automobile, qui est caractérisé en ce qu'il est équipé d'au moins un agencement de palier tel que défini précédemment.

L'agencement de palier peut faire partie d'un train avant du véhicule, d'un train arrière ou d'une transmission longitudinale.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est une vue en perspective d'un groupe motopropulseur d'un véhicule automobile et comprenant un agencement de palier conforme à l'invention ;
- la figure 2 est une vue agrandie de la partie cerclée en II de la figure 1 ;
- la figure 3 est une vue en perspective de l'agencement de palier de l'invention sans l'arbre de transmission ;
- la figure 4 est une vue en section suivant la ligne IV-IV de la figure 3 ; et
- la figure 5 est une vue agrandie de la partie cerclée en V de la figure 4.

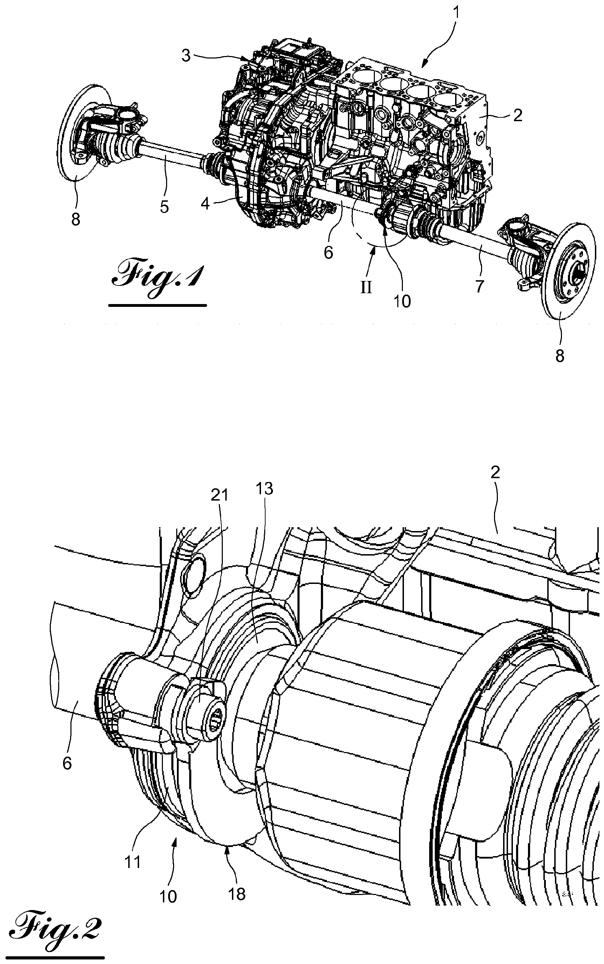

La figure 1 représente un groupe motopropulseur 1 d'un véhicule automobile disposé transversalement dans le compartiment moteur, non représenté, de ce véhicule.

Le groupe motopropulseur 1 comprend un moteur thermique 2 partiellement représenté accouplé à une boîte de vitesses 3 qui comporte un différentiel 4.

Une série d'arbres de transmission 5, 6, 7 est disposée sensiblement transversalement à l'axe longitudinal du véhicule et fournit le couple de sortie du différentiel 4 à un jeu de roues avant du train avant du véhicule et dont seuls les disques de frein 8 sont représentés.

Une première chaîne cinématique, sous la forme de l'arbre de transmission 5, est rattachée entre une sortie du différentiel 4 et une roue avant associée. Un entraînement pour l'autre roue avant est fourni par une autre sortie du différentiel 4, par l'intermédiaire d'une deuxième chaîne cinématique constituée par l'arbre de transmission interne 6 et l'arbre de transmission externe 7 qui font partie du même ensemble de transmission.

L'arbre de transmission interne 6, qui est situé en regard et à proximité du moteur thermique 2 en arrière de ce dernier, est supporté par un agencement de palier 10.

L'agencement de palier 10 comprend une chaise ou console 11 constituant un palier et solidaire du carter du moteur thermique 2. Le palier 11 peut être réalisé en une seule pièce avec le carter du moteur 2 ou peut être fixé à ce carter par l'intermédiaire de vis de fixation, comme représenté aux figures.

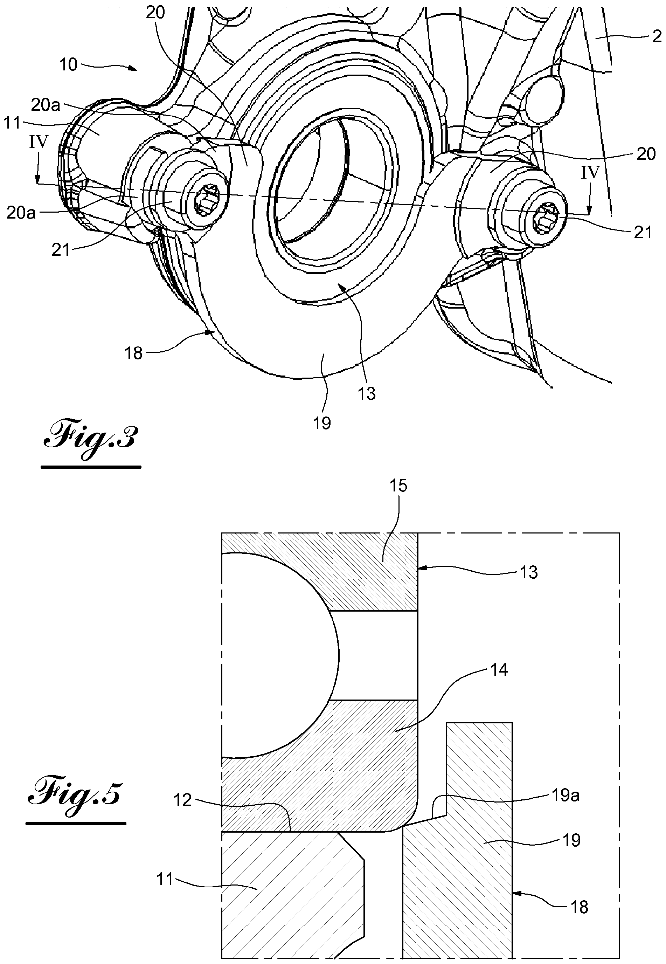

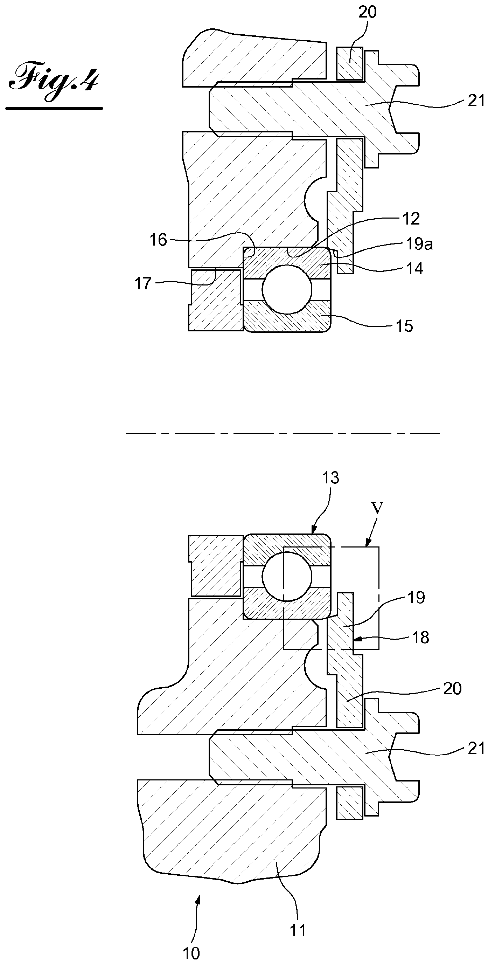

Comme cela ressort mieux des figures 2 à 5 et en particulier les figures 4 et 5, le palier 11 comprend un siège ou portée annulaire de roulement 12 dans lequel est axialement fixé le roulement à billes ou à aiguilles 13.

Ainsi, la bague extérieure de roulement 14 du roulement 13 est logée dans le siège de palier 12 du palier 11 tandis que la bague intérieure de roulement 15 est traversée par l'arbre de transmission 6 afin de supporter ce dernier de manière rotative.

Le roulement 13 est fixé axialement en venant en butée par l'un de ses côtés sur un épaulement annulaire interne 16 définissant un passage 17 à travers lui, qui est assez grand pour fournir un jeu fonctionnel pour l'arbre de transmission interne 6, mais qui est assez étroit pour bloquer tout mouvement axial du roulement 13 hors du siège de palier 12 dans le sens de cet épaulement.

Le roulement 13 fait en partie saillie extérieurement du siège de palier 12 à son côté opposé à l'épaulement 16.

L'agencement de palier 10 comprend en outre une bride de retenue 18 qui est, de façon amovible, fixée au palier 11 de manière à immobiliser au moins axialement le roulement 13 dans le siège de palier 12, dans le sens opposé à l'épaulement 16.

Selon l'invention, la bride de retenue 18 comprend une partie métallique plane rigide sensiblement semi-circulaire 19 et deux pattes 20 solidaires respectivement des deux extrémités de la partie sensiblement semi-circulaire 19 de la bride de retenue 18, lesquelles pattes 20 sont fixées de manière amovible au palier 11 par deux vis de fixation 21 traversant les deux pattes 20, et ancrées dans deux trous taraudés du palier 11.

La partie sensiblement semi-circulaire 19 de la bride de retenue 18 comporte à l'une de ses faces une portée interne tronconique sensiblement semi-circulaire 19a apte à venir en appui sur une partie correspondante sensiblement semi-circulaire du bord d'extrémité annulaire externe de la partie en saillie extérieurement du roulement 13 de manière à non seulement immobiliser axialement le roulement 13 dans son siège de palier 12 mais également à immobiliser radialement le roulement 13 dans ce siège de palier.

Ainsi, lorsque la bride de retenue 18 est fixée au palier 11, sa portée interne tronconique 19a est en appui sur le bord externe de la partie annulaire correspondante de la bague de roulement extérieure 14 du roulement 13, compensant ainsi le jeu radial de ce roulement dans le siège de palier 12 pour supprimer tout degré de liberté radiale du roulement de transmission et, par conséquent, supprimant tout bruit parasite perceptible par les passagers du véhicule.

Avantageusement, l'une 20 des pattes de fixation de la bride de retenue 18 est montée pivotante autour de la vis de fixation correspondante 21 entre une position ouverte de la bride de retenue 18 dans laquelle le roulement 13 peut être monté avec son arbre de transmission 6 dans le siège de palier 12 et une position fermée de cette bride dans laquelle le roulement 13 est immobilisé dans le siège de palier 12. A cet effet, l'autre patte de fixation 20 de la bride de retenue 18 présente une forme de fourche à deux mors 20a définissant une encoche dans laquelle peut être engagée la vis de fixation correspondante 21 opposée à la vis 21 permettant le pivotement de la bride interne 18. Ainsi, avant de monter le roulement 13 avec son arbre de transmission 6 dans le palier 11, la bride de retenue 18 occupe sa position ouverte abaissée par pivotement autour de la vis de fixation 21 traversant la patte 20 opposée à celle comportant les deux mors 20a en considérant la figure 3. Une fois le roulement 13 engagé dans le siège de palier 12 en étant en appui par son côté correspondant sur l'épaulement d'extrémité 16 du palier 11, l'opérateur fait pivoter la bride de retenue 18 autour de la vis de fixation 21 pour engager les deux mors 20a de l'autre patte 20 de part et d'autre de la vis de fixation correspondante 21 en amenant en appui la portée interne tronconique sensiblement semi-circulaire 19a sur la partie semi-circulaire correspondante du bord d'extrémité externe de la partie faisant saillie extérieure du roulement 13. Puis les deux vis de fixation 21 sont bloquées pour centrer radialement le roulement 13 dans son support de palier 12.

L'invention a été décrite en référence à un arbre de transmission d'un groupe motopropulseur à moteur thermique, mais il est bien entendu qu'elle peut s'appliquer à un arbre de transmission d'un groupe motopropulseur à moteur électrique.

L'invention non seulement supprime les bruits parasites perceptibles par les passagers d'un véhicule en supprimant la liberté radiale du palier de transmission, mais est également peu coûteuse car générant une économie de 0,04 € par véhicule, la bride de retenue pouvant équiper environ la moitié des véhicules produits par un constructeur d'automobiles. En outre, l'invention présente une relativement longue durabilité de plus de 15 ans tant qu'existera le principe de transmission mécanique avec palier.

## Revendications

1. Agencement de palier radial (13) d'arbre de transmission (6) d'un véhicule, notamment automobile, comprenant un palier (11) solidaire du carter du moteur de propulsion (2) du véhicule, un siège de palier (12) formé dans le palier (11) et dans lequel est axialement fixé à l'un de ses côtés un roulement (13) supportant de manière rotative l'arbre de transmission (6), lequel roulement (13) fait en partie saillie extérieurement du siège de palier (12) à son côté opposé, et une bride de retenue (18) amoviblement fixée au palier (11) et immobilisant au moins axialement le roulement (13) dans le siège de palier (12), **caractérisé en ce que** la bride de retenue (18) comprend une partie sensiblement semi-circulaire (19) comportant une portée interne tronconique sensiblement semi-circulaire (19a) en appui sur une partie correspondante du bord d'extrémité annulaire externe de la partie en saillie extérieurement du roulement (13) de manière à immobiliser radialement le roulement (13) dans le siège de palier (12).

2. Agencement de palier radial selon la revendication 1, **caractérisé en ce que** la bride de retenue (18) comprend deux pattes (20) solidaires respectivement des deux extrémités de la partie sensiblement semi-circulaire (19) de la bride de retenue (18) et qui sont fixées au palier (11) de manière amovible par des vis de fixation (21).

3. Agencement de palier radial selon la revendication 2, **caractérisé en ce que** l'une (20) des pattes de fixation de la bride de retenue (18) est montée pivotante autour de la vis de fixation correspondante (21) entre une position ouverte de la bride de retenue (18) dans laquelle le roulement (13) peut être monté dans le siège de palier (12) et une position fermée de cette bride dans laquelle le roulement (13) est immobilisé dans le siège de palier (12).

4. Agencement de palier radial selon la revendication 3, **caractérisé en ce que** l'autre (20) des pattes de fixation possède une encoche (20a) dans laquelle est engagée la vis de fixation (21) opposée à celle permettant le pivotement de la bride de retenue (18).

5. Agencement de palier radial selon l'une des revendications 1 à 4, **caractérisé en ce que** le roulement (13) est un roulement à billes, à rouleaux ou à aiguilles.

6. Véhicule notamment automobile, **caractérisé en ce qu'**il est équipé d'au moins un agencement de palier tel que défini dans l'une quelconque des revendications 1 à 5.

7. Véhicule notamment automobile selon la revendication 6, **caractérisé en ce que** l'agencement de palier fait partie d'un train avant du véhicule, d'un train arrière , ou d'une transmission longitudinale.

## Patentansprüche

1. Radiallageranordnung (13) einer Getriebewelle (6) eines Fahrzeugs, insbesondere eines Kraftfahrzeugs, umfassend ein Lager (11), das in das Gehäuse des Antriebsmotors (2) des Fahrzeugs integriert ist, einen Lagersitz (12) in dem Lager (11) und in dem axial an einer seiner Seiten ein Lager (13) befestigt ist, das die Getriebewelle (6) drehbar trägt, wobei das Lager (13) teilweise aus dem Sitz von nach außen vorsteht Lager (12) auf seiner gegenüberliegenden Seite, und ein Halteflansch (18) lösbar mit dem Lager (11) befestigt und zumindest in axialer Richtung Immobilisieren das Lagers(13) in dem Lagersitz (12) **dadurch gekennzeichnet, dass** der Halteflansch (18) ein im wesentlichen halbkreisförmiges Teil (19) mit einer im wesentlichen halbkreisförmigen frustokonischen inneren Lagerfläche (19a) umfasst, die auf einem Teil ruht der äußeren ringförmigen Endkante des nach außen ragenden Teils des Lagers (13), um das Lager (13) radial im Lagersitz (12) zu fixieren .

2. Radiallageranordnung nach Anspruch 1, **dadurch gekennzeichnet, daß** der Halteflansch (18) zwei Laschen (20), die jeweils integral mit zwei Enden des Teils im wesentlichen halbkreisförmigen (19) des Halteflansches (18) und die entfernbar mit Befestigungsschrauben (21) am Lager (11) befestigt sind.

3. Radiallageranordnung nach Anspruch 2, **dadurch gekennzeichnet, dass** eine (20) der Befestigungslaschen des Halteflansches (18) schwenkbar um die entsprechende Befestigungsschraube (21) zwischen einer offenen Position der Halteflansch (18), in dem das Lager (13) im Lagersitz (12) montiert werden kann, und eine geschlossene Position dieses Flansches, in der das Lager (13) im Lagersitz (12) fixiert ist.

4. Radiallageranordnung nach Anspruch 3, **dadurch gekennzeichnet, dass** die andere (20) der Befestigungsösen eine Kerbe (20a) aufweist, in die die Befestigungsschraube (21) entgegengesetzt zu derjenigen eingreift, die das Schwenken des Flansches ermöglicht. Halter (18).

5. Radiallageranordnung nach einem der Ansprüche 1 bis 4, **dadurch gekennzeichnet, dass** das Lager (13) ein Kugel-, Rollen- oder Nadellager ist.

6. Fahrzeug einschließlich Kraftfahrzeug, **dadurch gekennzeichnet, dass** es mit mindestens einer Lageranordnung gemäß einem der Ansprüche 1 bis 5 ausgestattet ist.

7. Fahrzeug insbesondere ein Kraftfahrzeug nach Anspruch 6, **dadurch gekennzeichnet, dass** die Lageranordnung Teil einer Vorderachse des Fahrzeugs, einer Hinterachse oder eines Längsgetriebes ist.

## Claims

1. Radial bearing arrangement (13) of a transmission shaft (6) of a vehicle, in particular a motor vehicle, comprising a bearing (11) integral with the housing of the propulsion motor (2) of the vehicle, a bearing seat (12) formed in the bearing (11) and in which is axially fixed to one of its sides a bearing (13) rotatably supporting the transmission shaft (6), which bearing (13) projects in part outwardly from the seat of bearing (12) on its opposite side, and a retaining flange (18) removably fixed to the bearing (11) and at least axially immobilizing the bearing(13) in the bearing seat (12), **characterized in that** the retaining flange (18) comprises a substantially semi-circular part (19) having a substantially semi-circular frustoconical internal bearing surface (19a) resting on a part of the outer annular end edge of the outwardly projecting part of the bearing (13) so as to radially immobilize the bearing (13) in the bearing seat (12).

2. Radial bearing arrangement according to claim 1, **characterized in that** the retaining flange (18) comprises two tabs (20) respectively integral with two ends of the part substantially semi- circular (19) of the retaining flange (18) and which are fixed to the bearing (11) in a removable manner by fixing screws (21).

3. Radial bearing arrangement according to claim 2, **characterized in that** one (20) of the retaining flange (18) fixing tabs is pivotally mounted around the corresponding fixing screw (21) between an open position of the retaining flange (18) in which the bearing (13) can be mounted in the bearing seat (12) and a closed position of this flange in which the bearing (13) is immobilized in the bearing seat (12).

4. Radial bearing arrangement according to claim 3, **characterized in that** the other (20) of the fixing lugs has a notch (20a) in which is engaged the fixing screw (21) opposite to that allowing the pivoting of the flange. retainer (18) .

5. Radial bearing arrangement according to one of claims 1 to 4, **characterized in that** the bearing (13) is a ball, roller or needle bearing.

6. Vehicle in particular a motor vehicle, **characterized in that** it is equipped with at least one bearing arrangement as defined in any one of claims 1 to 5.

7. Vehicle in particular a motor vehicle according to Claim 6, **characterized in that** the bearing arrangement forms part of a front axle of the vehicle, of a rear axle, or of a longitudinal transmission.
